(19) **Europäisches Patentamt / European Patent Office / Office européen des brevets**

(11) **EP 4 390 860 A1**

(12) # EUROPEAN PATENT APPLICATION

(43) Date of publication:
**26.06.2024  Bulletin 2024/26**

(21) Application number: **23215426.0**

(22) Date of filing: **11.12.2023**

(51) International Patent Classification (IPC):
**G06V 10/54** (2022.01)   **G06V 10/82** (2022.01)
**G06V 10/94** (2022.01)   **G06V 20/13** (2022.01)
**G06V 20/10** (2022.01)   **B64G 1/10** (2006.01)

(52) Cooperative Patent Classification (CPC):
**G06V 10/82; B64G 1/1021; B64G 1/1085;
G06V 10/54; G06V 10/95; G06V 20/13;
G06V 20/194**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022  CN 202211648533**

(71) Applicant: **Aerospace Information Research
Institute,
Chinese Academy of Sciences
Beijing 100094 (CN)**

(72) Inventors:
- **FU, Kun**
  **Beijing, 100094 (CN)**
- **SUN, Xian**
  **Beijing, 100094 (CN)**
- **ZHAO, Liangjin**
  **Beijing, 100094 (CN)**
- **CHENG, Peirui**
  **Beijing, 100094 (CN)**
- **CHEN, Kaiqiang**
  **Beijing, 100094 (CN)**
- **WANG, Zhirui**
  **Beijing, 100094 (CN)**
- **DUAN, Shujing**
  **Beijing, 100094 (CN)**
- **HU, Lin**
  **Beijing, 100094 (CN)**
- **ZHANG, Ting**
  **Beijing, 100094 (CN)**

(74) Representative: **Gill Jennings & Every LLP
The Broadgate Tower
20 Primrose Street
London EC2A 2ES (GB)**

(54) **CONSTELLATION-BASED DISTRIBUTED COLLABORATIVE REMOTE SENSING DETERMINATION METHOD AND APPARATUS, STORAGE MEDIUM AND SATELLITE**

(57)    The present disclosure relates to the technical field of data identification, and in particular to a constellation-based remote sensing distributed collaborative determination method and apparatus, and a medium and a satellite. The constellation includes n (n≥2) satellites, and the constellation includes a first satellite and a second satellite. The method includes: obtaining, by the first satellite using a trained first neural network, a first prediction result and a first feature of first remote sensing data of an observation region; and transmitting, by the first satellite, the first prediction result and the first feature to the second satellite. The second satellite performs determination based on the first prediction result, the first feature, a second prediction result and a second feature. According to the present disclosure, the interpretation accuracy can be improved based on multiple pieces of remote sensing data obtained in different imaging modes for a same observation region.

S100, obtain, by the first satellite using a trained first neural network model, a first prediction classification result and a first feature of a first remote sensing data of an observation region, where the first prediction classification result includes a probability of the first remote sensing data including an object of a predetermined type, and the first feature is used for obtaining a probability

S200, transmit, by the first satellite, the first prediction classification result and the first feature to the second satellite, where the second satellite performs determination based on the first prediction classification result, the first feature, a second prediction classification result and a second feature, and the second prediction classification result and the second feature are respectively a prediction classification result and a feature of a second remote sensing data of the observation region obtained by the second satellite

**Figure 1**

**Description**

**FIELD**

The present disclosure relates to the technical field of data identification, and in particular to a constellation-based remote sensing distributed collaborative determination method and apparatus, and a medium and a satellite.

**BACKGROUND**

At present, remote sensing observations of the Earth develop to a stage of on-orbit processing on satellites. A single satellite may obtain remote sensing data, such as optical remote sensing data, radar remote sensing data or hyperspectral remote sensing data, for a certain observation region. However, the processing capability of the single satellite for the obtained remote sensing data is limited, and the accuracy of interpreting ground observation data based on the single satellite is low, not meeting the task requirements.

In recent years, the number of in-orbit remote sensing satellites is significantly increased. A constellation includes multiple satellites, and each of the satellites may obtain a remote sensing image with complementary information for a same observation region. How to improve the interpretation accuracy based on the multiple pieces of remote sensing data for the same observation region is a problem to be urgently solved.

**SUMMARY**

According to the present disclosure, a constellation-based remote sensing distributed collaborative determination method and apparatus, and a medium and a satellite are provided to improve the interpretation accuracy based on multiple pieces of remote sensing data obtained in different imaging modes for a same observation region.

According to a first aspect of the present disclosure, a constellation-based remote sensing distributed collaborative determination method is provided. A constellation includes n (n≥2) satellites, and the constellation includes a first satellite and a second satellite. The constellation-based remote sensing distributed collaborative determination method includes:

obtaining, by the first satellite using a trained first neural network, a first prediction result and a first feature of first remote sensing data of an observation region, where the first neural network includes a first shallow feature extractor, a first deep feature extractor, a first predictor and a second deep feature extractor, the first remote sensing data of the observation region is inputted to the first shallow feature extractor, the first shallow feature extractor is configured to extract visual texture information of the first remote sensing data, an output of the first shallow feature extractor is inputted to the first deep feature extractor and the second deep feature extractor, the first deep feature extractor and the second deep feature extractor are configured to extract semantic information of the first remote sensing data, an output of the first deep feature extractor is inputted to the first predictor, the first predictor outputs the first prediction result, the first prediction result includes a probability of the first remote sensing data including an object of a predetermined type, the second deep feature extractor outputs the first feature, and the first feature is used for obtaining probabilities; and

transmitting, by the first satellite, the first prediction result and the first feature to the second satellite, where the second satellite performs determination based on the first prediction result, the first feature, a second prediction result and a second feature, the second prediction result and the second feature are respectively a prediction result and a feature of second remote sensing data of the observation region obtained by the second satellite, the second prediction result includes a probability of the second remote sensing data including an object of a predetermined type, the second feature is used for obtaining a probability, the first remote sensing data is obtained in an imaging mode same as or different from an imaging mode in which the second remote sensing data is obtained, and the imaging mode includes an optical remote sensing data imaging mode, a radar remote sensing data imaging mode, a hyperspectral remote sensing data imaging mode, the second prediction result and the second feature are obtained by the second satellite using a trained second neural network, the second neural network includes a second shallow feature extractor, a third deep feature extractor, a third predictor, a fourth deep feature extractor and a fourth predictor, the first neural network further includes a second predictor, and the first neural network is trained by:

training the first neural network based on first remote sensing data training samples, and transmitting model parameters of the second deep feature extractor and the second predictor obtained after training to the second satellite, where the second satellite obtains universal model parameters based on the model parameters of the second deep feature extractor and the second predictor and model parameters of the fourth deep feature extractor and the fourth predictor, the second satellite transmits the universal model parameters to the first satellite, the first remote sensing data training samples are obtained in an imaging mode same as the imaging mode in which the first remote sensing data is obtained, the model parameters of the fourth deep feature extractor and the fourth predictor are obtained by training the second neural network based on second remote sensing data training samples, and the second remote sensing data training samples are obtained in an imaging mode same as the imaging mode in which the second remote sensing data is obtained; and

receiving the universal model parameters, and replacing the model parameters of the second deep feature extractor and the second predictor with the universal model parameters.

In an embodiment, the second remote sensing data of the observation region is inputted to the second shallow feature extractor, the second shallow feature extractor is configured to extract visual texture information of the second remote sensing data, an output of the second shallow feature extractor is inputted to the third deep feature extractor and the fourth deep feature extractor, the third deep feature extractor and the fourth deep feature extractor are configured to extract semantic information of the second remote sensing data, an output of the third deep feature extractor is inputted to the third predictor, the third predictor is configured to obtain the probability of the second remote sensing data including the object of the predetermined type, the third predictor outputs the second prediction result, and the fourth deep feature extractor outputs the second feature.

In an embodiment, the second predictor is configured to obtain the probability of the first remote sensing data including the object of the predetermined type and a position of the object of the predetermined type in the first remote sensing data, an output of the second deep feature extractor is inputted to the second predictor, the fourth predictor is configured to obtain the probability of the second remote sensing data including the object of the predetermined type and a position of the object of the predetermined type in the second remote sensing data, an output of the fourth deep feature extractor is inputted to the fourth predictor, the first shallow feature extractor, the first deep feature extractor, the first predictor, the second shallow feature extractor, the third deep feature extractor and the third predictor do not perform interaction in training the first neural network and the second neural network, and the second deep feature extractor, the second predictor, the fourth deep feature extractor and the fourth predictor perform interaction in training the first neural network and the second neural network.

In an embodiment, the universal model parameters are positively correlated with the model parameters of the second deep feature extractor and the second predictor, and the universal model parameters are positively correlated with the model parameters of the fourth deep feature extractor and the fourth predictor.

In an embodiment, the second satellite performs determination based on the first prediction result, the first feature, the second prediction result and the second feature by: obtaining, based on the first prediction result, a first information entropy corresponding to the first prediction result; obtaining, based on the second prediction result, a second information entropy corresponding to the second prediction result; performing normalization processing on the first information entropy and the second information entropy to obtain a first weight corresponding to the first satellite and a second weight corresponding to the second satellite; obtaining a fused feature based on the first weight, the first feature, the second weight, and the second feature; and performing determination based on the fused feature.

In an embodiment, both the first feature and the second feature are positively correlated with the fused feature.

According to a second aspect of the present disclosure, a constellation-based remote sensing distributed collaborative determination apparatus is provided. A constellation includes n (n≥2) satellites, and the constellation includes a first satellite and a second satellite. The constellation-based remote sensing distributed collaborative determination apparatus includes: a first obtaining module and a first transmitting module.

The first obtaining module is configured to obtain, by the first satellite using a trained first neural network, a first prediction result and a first feature of first remote sensing data of an observation region. The first neural network includes a first shallow feature extractor, a first deep feature extractor, a first predictor and a second deep feature extractor. The first remote sensing data of the observation region is inputted to the first shallow feature extractor. The first shallow feature extractor is configured to extract visual texture information of the first remote sensing data. An output of the first shallow feature extractor is inputted to the first deep feature extractor and the second deep feature extractor. The first deep feature extractor and the second deep feature extractor are configured to extract semantic information of the first remote sensing data. An output of the first deep feature extractor is inputted to the first predictor. The first predictor outputs the first prediction result. The first prediction result includes a probability of the first remote sensing data including an object of a predetermined type. The second deep feature extractor outputs the first feature, and the first feature is used for obtaining probabilities.

The first transmitting module is configured to transmit, by using the first satellite, the first prediction result and the first feature to the second satellite. The second satellite performs determination based on the first prediction result, the first feature, a second prediction result and a second feature. The second prediction result and the second feature are respectively a prediction result and a feature of second remote sensing data of the observation region obtained by the second satellite. The second prediction result includes a probability of the second remote sensing data including an object of a predetermined type. The second feature is used for obtaining a probability. The first remote sensing data is obtained in an imaging mode same as or different from an imaging mode in which the second remote sensing data is obtained. The imaging mode includes an optical remote sensing data imaging mode, a radar remote sensing data imaging mode, and a hyperspectral remote sensing data imaging mode.

The second prediction result and the second feature are obtained by the second satellite using a trained second neural network. The second neural network includes a second shallow feature extractor, a third deep feature extractor, a third predictor, a fourth deep feature extractor and a fourth predictor. The first neural network further includes a second predictor. The first neural network is trained by:

training the first neural network based on first remote sensing data training samples, and transmitting model parameters of the second deep feature extractor and the second predictor obtained after training to the second satellite, where the second satellite obtains universal model parameters based on the model parameters of the second deep feature extractor and the second predictor and model parameters of the fourth deep feature extractor and the fourth predictor, the second satellite transmits the universal model parameters to the first satellite, the first remote sensing data training samples are obtained in an imaging mode same as the imaging mode in which the first remote sensing data is obtained, the model parameters of the fourth deep feature extractor and the fourth predictor are obtained by training the second neural network based on second remote sensing data training samples, and the second remote sensing data training samples are obtained in an imaging mode same as the imaging mode in which the second remote sensing data is obtained; and

receiving the universal model parameters, and replacing the model parameters of the second deep feature extractor and the second predictor with the universal model parameters.

In an embodiment, the second remote sensing data of the observation region is inputted to the second shallow feature extractor, the second shallow feature extractor is configured to extract visual texture information of the second remote sensing data, an output of the second shallow feature extractor is inputted to the third deep feature extractor and the fourth deep feature extractor, the third deep feature extractor and the fourth deep feature extractor are configured to extract semantic information of the second remote sensing data, an output of the third deep feature extractor is inputted to the third predictor, the third predictor is configured to obtain the probability of the second remote sensing data including the object of the predetermined type, the third predictor outputs the second prediction result, and the fourth deep feature extractor outputs the second feature.

In an embodiment, the second predictor is configured to obtain the probability of the first remote sensing data including the object of the predetermined type and a position of the object of the predetermined type in the first remote sensing data, an output of the second deep feature extractor is inputted to the second predictor, the fourth predictor is configured to obtain the probability of the second remote sensing data including the object of the predetermined type and a position of the object of the predetermined type in the second remote sensing data, an output of the fourth deep feature extractor is inputted to the fourth predictor, the first shallow feature extractor, the first deep feature extractor, the first predictor, the second shallow feature extractor, the third deep feature extractor and the third predictor do not perform interaction in training the first neural network and the second neural network, and the second deep feature extractor, the second predictor, the fourth deep feature extractor and the fourth predictor perform interaction in training the first neural network and the second neural network.

In an embodiment, the universal model parameters are positively correlated with the model parameters of the second deep feature extractor and the second predictor, and the universal model parameters are positively correlated with the model parameters of the fourth deep feature extractor and the fourth predictor.

In an embodiment, the second satellite performs determination based on the first prediction result, the first feature, the second prediction result and the second feature by: obtaining, based on the first prediction result, a first information entropy corresponding to the first prediction result; obtaining, based on the second prediction result, a second information entropy corresponding to the second prediction result; performing normalization processing on the first information entropy and the second information entropy to obtain a first weight corresponding to the first satellite and a second weight corresponding to the second satellite; obtaining a fused feature based on the first weight, the first feature, the second weight, and the second feature; and performing determination based on the fused feature.

In an embodiment, both the first feature and the second feature are positively correlated with the fused feature.

According to a third aspect of the present disclosure, a storage medium is provided. The storage medium stores a computer program. The computer program, when executed by a processor, causes the processor to perform the constellation-based remote sensing distributed collaborative determination method described above.

According to a fourth aspect of the present disclosure, a satellite is provided. The satellite includes a computer device. The computer device includes a processor and a memory. The memory stores computer-readable instructions.

The computer-readable instructions, when executed by the processor, cause the processor to perform the constellation-based remote sensing distributed collaborative determination method described above.

Compared with the conventional technology, the present disclosure has obvious beneficial effects. Based on the above technical solutions, the present disclosure has technological advancement and practicality, and has broad industrial utilization value. According to the present disclosure, at least the following beneficial effects can be achieved.

In the present disclosure, a constellation includes a first satellite and a second satellite. The first satellite and the second satellite obtain different remote sensing data from a same observation region. The first satellite is arranged with a trained first neural network. The first neural network has a specific structure, and includes a first shallow feature extractor, a first deep feature extractor, a first predictor, and a second deep feature extractor. The first predictor outputs a first prediction result of first remote sensing data of the observation region obtained by the first satellite. The second deep feature extractor outputs a first feature of the first remote sensing data of the observation region obtained by the first satellite. The first satellite transmits the first prediction result and the first feature to the second satellite, so that the second satellite performs determination based on the first prediction result and the first feature. According to the present disclosure, the first satellite performs information interaction with the second satellite, integrating the feature expression capabilities of the first satellite and the second satellite, obtaining an accurate inference result for the observation region, and thereby improving the interpretation accuracy for the observation region.

## BRIEF DESCRIPTION OF THE DRAWINGS

In order to clearly illustrate the technical solutions in the embodiments of the present disclosure, drawings to be used in the description of the embodiments of the present disclosure are briefly described hereinafter. It is apparent that the drawings in the following description show only some embodiments of the present disclosure. Those skilled in the art can obtain other drawings based on these drawings without any creative efforts.

Figure 1 is a flow chart of a constellation-based remote sensing distributed collaborative determination method according to an embodiment of the present disclosure;

Figure 2 is a flow chart of training a first neural network according to an embodiment of the present disclosure;

Figure 3 is a flow chart of training neural networks for multiple satellites according to an embodiment of the present disclosure;

Figure 4 is a schematic structural diagram of a shallow feature extractor and a deep feature extractor according to an embodiment of the present disclosure;

Figure 5 is a schematic structural diagram of Block1 according to an embodiment of the present disclosure;

Figure 6 is a schematic structural diagram of a universal task head according to an embodiment of the present disclosure;

Figure 7 is a flow chart of a testing process according to an embodiment of the present disclosure;

Figure 8 is a flow chart of a second satellite performing determination according to an embodiment of the present disclosure;

Figure 9 is a schematic diagram of a determination process according to an embodiment of the present disclosure;

Figure 10 is a flow chart of a constellation-based remote sensing distributed collaborative determination method according to another embodiment of the present disclosure;

Figure 11 is a flow chart of training a second neural network according to an embodiment of the present disclosure;

Figure 12 is a schematic structural diagram of a constellation-based remote sensing distributed collaborative determination apparatus according to an embodiment of the present disclosure;

Figure 13 is a schematic structural diagram of a first obtaining module according to an embodiment of the present disclosure;

Figure 14 is a schematic structural diagram of a constellation-based remote sensing distributed collaborative determination apparatus according to another embodiment of the present disclosure; and

Figure 15 is a schematic structural diagram of a second obtaining module according to an embodiment of the present disclosure.

## DETAILED DESCRIPTION

Hereafter, the technical solutions in the embodiments of the present disclosure are described clearly and completely in conjunction with the drawings of the embodiments of the present disclosure. It is apparent that the described embodiments are only a part of the embodiments of the present disclosure, rather than all embodiments. Based on the embodiments in the present disclosure, all other embodiments obtained by those skilled in the art without any creative efforts fall within the protection scope of the present disclosure.

The present disclosure is applicable to a situation in which a constellation obtains different remote sensing data for a same observation region. The constellation includes n satellites, where n≥2. Each of satellites in the constellation obtains a piece of remote sensing data. The remote sensing data obtained by different satellites in the constellation may be acquired in a same imaging mode or different imaging modes. The imaging mode includes an optical remote sensing data imaging mode, a radar remote sensing data imaging mode, and a hyperspectral remote sensing data imaging mode.

In the present disclosure, each of the satellites in the constellation has the ability to process obtained remote sensing data to obtain a detection result of the corresponding remote sensing data. The detection result includes a prediction result and a feature. The prediction result includes a probability of the corresponding remote sensing data including an object of a predetermined type. The feature is not a probability, and is used for obtaining a probability. The probability obtained based on the feature may be the same or different from the probability included in the prediction result.

In the present disclosure, the satellites in the constellation are divided into two groups. The satellites in the first group upload detection results and do not combine detection results of other satellites in the constellation. The number of the satellites in the first group may be greater than or equal to 1. The satellites in the second group receive the detection results from the satellites in the first group, and combine detection results of all satellites in the constellation to output a final detection result. The number of satellites in the second group is 1.

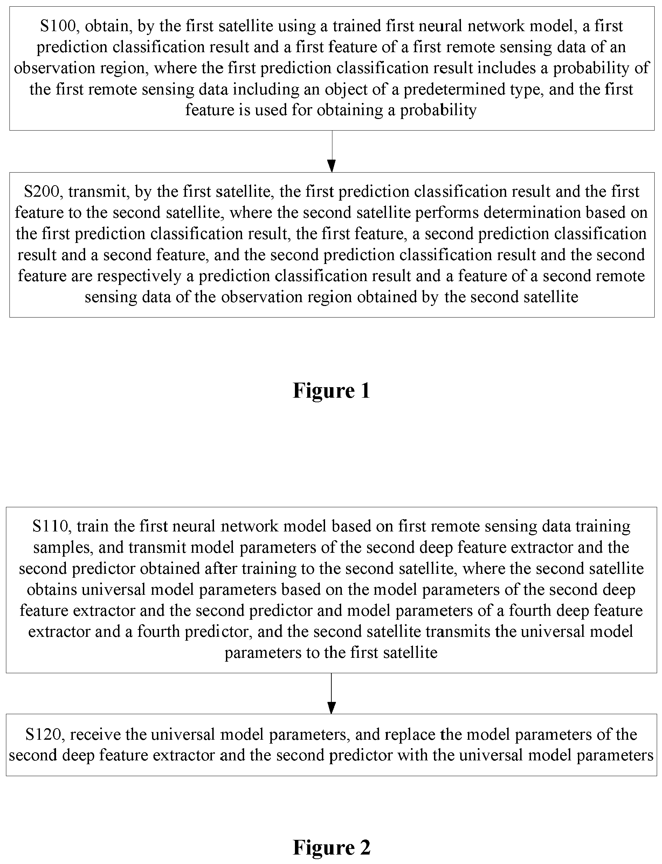

In the present disclosure, the first satellite belongs to the first group, and the second satellite belongs to the second group. As shown in Figure 1, a constellation-based remote sensing distributed collaborative determination method includes the following steps S100 and S200.

In S100, the first satellite obtains, by using a trained first neural network, a first prediction result and a first feature of first remote sensing data of an observation region. The first prediction result includes a probability of the first remote sensing data including an object of a predetermined type. The first feature is used for obtaining probabilities.

In the present disclosure, the first satellite is arranged with a trained first neural network. The first neural network includes a first sub model and a second sub model. The first prediction result is obtained by the first sub model, and the first feature is obtained by the second sub model.

In an embodiment, the first sub model includes a first shallow feature extractor, a first deep feature extractor and a first predictor, and the second sub model includes a first shallow feature extractor, a second deep feature extractor and a second predictor. The first remote sensing data of the observation region is inputted to the first shallow feature extractor. The first shallow feature extractor is configured to extract visual texture information of the first remote sensing data. An output of the first shallow feature extractor is inputted to the first deep feature extractor and the second deep feature extractor. The first deep feature extractor and the second deep feature extractor are configured to extract semantic information of the first remote sensing data. An output of the first deep feature extractor is inputted to the first predictor. The first predictor is configured to obtain the probability of the first remote sensing data including the object of the predetermined type. The first predictor outputs the first prediction result. The second predictor is configured to obtain the probability of the first remote sensing data including the object of the predetermined type and a position of the object of the predetermined type in the first remote sensing data. An output of the second deep feature extractor is inputted to the second predictor.

According to the present disclosure, as shown in Figure 2, the first neural network is trained by performing the following steps S110 and S 120.

In S 110, the first neural network is trained based on first remote sensing data training samples, and model parameters of the second deep feature extractor and the second predictor obtained after training are transmitted to the second satellite. The second satellite obtains universal model parameters based on the model parameters of the second deep feature extractor and the second predictor and model parameters of a fourth deep feature extractor and a fourth predictor, and the second satellite transmits the universal model parameters to the first satellite. The first remote sensing data training samples are obtained in an imaging mode same as an imaging mode in which the first remote sensing data is obtained. The model parameters of the fourth deep feature extractor and the fourth predictor are obtained by training a second neural network based on second remote sensing data training samples. The second remote sensing data training samples are obtained in an imaging mode same as an imaging mode in which the second remote sensing data is obtained.

In the present disclosure, the second satellite is arranged with a trained second neural network. The second neural network includes a third sub model and a fourth sub model. The third sub model includes a second shallow feature extractor, a third deep feature extractor, and a third predictor. The fourth sub model includes a second shallow feature extractor, a fourth deep feature extractor, and a fourth predictor. The second remote sensing data of the observation region is inputted to the second shallow feature extractor. The second shallow feature extractor is configured to extract visual texture information of the second remote sensing data. An output of the second shallow feature extractor is inputted to the third deep feature extractor and the fourth deep feature extractor. The third deep feature extractor and the fourth deep feature extractor are configured to extract semantic information of the second remote sensing data. An output of the third deep feature extractor is inputted to the third predictor. The third predictor is configured to obtain a probability of the second remote sensing data including an object of a predetermined type. The third predictor outputs the second prediction result. The fourth deep feature extractor outputs the second feature. The fourth predictor is configured to obtain the probability of the second remote sensing data including the object of the predetermined type and a position of the object of the predetermined type in the second remote sensing data. An output of the fourth deep feature extractor is inputted to the fourth predictor.

The first shallow feature extractor, the first deep feature extractor, the first predictor, the second shallow feature extractor, the third deep feature extractor and the third predictor do not perform interaction in training the first neural network and the second neural network. The second deep feature extractor, the second predictor, the fourth deep feature extractor and the fourth predictor perform interaction in training the first neural network and the second neural network.

In the present disclosure, model parameters of neural networks corresponding to the first satellite and the second satellite are randomly initialized before performing training. The parameters of the first sub model may be the same or different from the parameters of the third sub model, and the parameters of the second sub model are the same as the parameters of the fourth sub model. It should be noted that in a case that the first group includes other satellites in addition to the first satellite, it is required to configure parameters of first sub models of the other satellites to be same as or different from parameters of third sub models of the other satellites and configure parameters of second sub models of the other satellites to be same as parameters of fourth sub models of the other satellites before performing training.

It should be understood by those skilled in the art that any loss for object identification according to the conventional technology falls within the protection scope of the present disclosure. As an implementation of the conventional technology, in training the first neural network, a loss of the first neural network is set to $L=L_{per}+L_{share}$. $L_{per}$ represents a personalized loss of the first sub model, and $L_{per}=-\Sigma^M_{i=1}(1-p_i)^\gamma \log(p_i)$, where $\gamma$ represents a preset parameter inputted by the user, M represents the number of the first remote sensing data training samples, and $p_i$ represents a prediction classification probability of an i-th first remote sensing data training sample. $L_{share}$ represents a class equilibrium loss of the second sub model, and $L_{share}=L_{s\_share}+L_{g\_share}$. $L_{g\_share}$ meets to the following relationship:

$$L_{g\_share}=\sum^M_{i=1}\left(1-IOU_i+(\rho^2(b_i,b_i^{gt})/d_i^2)+v_i^2/((1-IOU_i)+v_i)\right)$$

$$v_i=4(\arctan(w_i^{gt}/h_i^{gt})-\arctan(w_i/h_i))/\pi^2$$

where $IOU_i = \dfrac{S_{A_i \cap B_i}}{S_{A_i \cup B_i}}$ , $A_i$ and $B_i$ respectively represent a prediction box and a label box of the i-th first remote sensing data training sample, S represents an area, $S_{A_i \cap B_i}$ represents an area after performing intersection on $A_i$ and $B_i$, $S_{A_i \cup B_i}$ represents an area after performing union on $A_i$ and $B_i$, $\rho(\bullet)$ represents an Euclidean distance, $b_i$ and $b_i^{gt}$ respectively represent a center point of the prediction box and a center point of the label box of the i-th first remote sensing data training sample, di represents a diagonal length of a minimum bounding rectangle box of the prediction box and the label box of the i-th first remote sensing data training sample, $w_i^{gt}$ and $h_i^{gt}$ respectively represent a width and a height of the label box of the i-th first remote sensing data training sample, $w_i$ and $h_i$ respectively represent a width and a height of the prediction box of the i-th first remote sensing data training sample.

$$L_{s\_share}=\sum^N_{c=1}\sum_{i \in Sc}[-q_i(1-p_i)^\gamma \log(p_i)]$$

where $q_i=1/N_{c,i}$, c=1,2, ..., N, N represents the number of categories of the first remote sensing data training samples, $N_{c,i}$ represents the number of first remote sensing data training samples of a category c to which the i-th first remote sensing data training sample belongs, Sc represents a first remote sensing data training sample set belonging to the category c.

In training the second neural network arranged on the second satellite, a loss same as the loss used in training the first neural network of the first satellite is used, which is not repeated herein.

According to the present disclosure, the universal model parameters are positively correlated with the model parameters of the second deep feature extractor and the second predictor, and the universal model parameters are positively correlated with the model parameters of the fourth deep feature extractor and the fourth predictor. In an embodiment, the universal model parameters are average values of the model parameters of the second deep feature extractor and the second predictor and the model parameters of the fourth deep feature extractor and the fourth predictor.

It should be understood that in a case that the second satellite receives model parameters of a deep feature extractor and a predictor in a second sub model corresponding to another satellite belong to the first group other than the first satellite, the universal model parameters are average values of the model parameters of deep feature extractors and predictors in second sub models of neural networks corresponding to the first satellite, the second satellite, and the another satellite belong to the first group.

In S 120, the universal model parameters are received, and the model parameters of the second deep feature extractor and the second predictor are replaced with the universal model parameters.

In the present disclosure, in training the first neural network of the first satellite, the model parameters of the second deep feature extractor and the second predictor are transmitted to the second satellite for parameter averaging communication, obtaining cross-satellite knowledge supplementation, thereby improving the generalization ability of the second sub model of the first neural network.

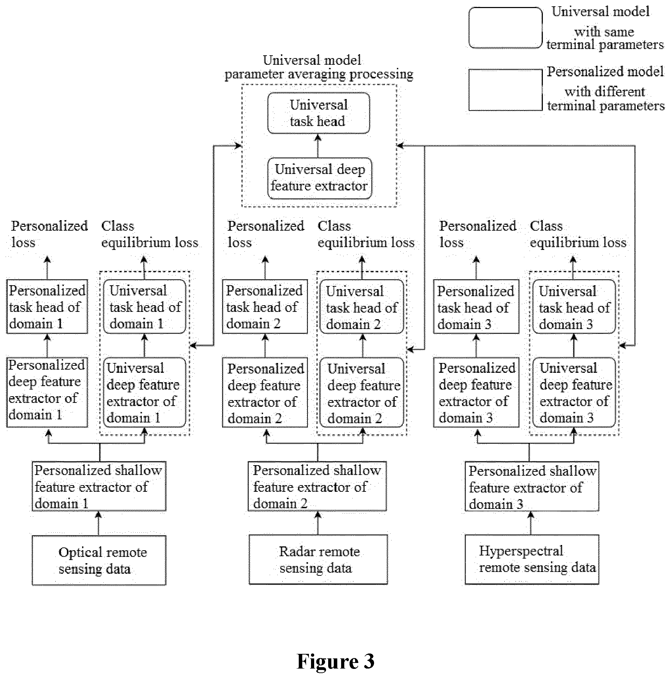

In an embodiment of the present disclosure, as shown in Figure 3, the constellation includes three satellites, which respectively obtain optical remote sensing data, radar remote sensing data, and hyperspectral remote sensing data for a same observation region. The three satellites are respectively denoted as a first satellite (that is, domain 1), a second satellite (that is, domain 2), and a third satellite (that is, domain 3), where the first satellite and the third satellite belong to the first group and the second satellite belongs to the second group. In the embodiment, each of the three satellites is arranged with a neural network for processing obtained remote sensing data. The neural network includes two branches and a shallow feature extractor shared by the two branches. A first branch and the shared shallow feature extractor form a first sub model of the neural network, and a second branch and the shared shallow feature extractor form a second sub model of the neural network. The first branch includes a personalized deep feature extractor and a personalized task head (that is, a predictor for the first branch). The second branch includes a universal deep feature extractor and a universal task head (that is, a predictor for the second branch). The difference between the second branch and the first branch is that the second branch performs interaction with other satellites.

According to the present disclosure, the first sub model and the second sub model share the shallow feature extractor, thus the following advantages can be achieved. The shallow feature extractor may be supervised based on a loss of the first sub model or/and a loss of the second sub model, so that the shallow feature extractor may contact different supervision information, facilitating the shallow feature extractor extracting features of remote sensing data. Moreover, an output of the shallow feature extractor is inputted to the personalized deep feature extractor and the universal deep feature extractor, so that same information is inputted to the personalized deep feature extractor and the universal deep feature extractor, an output of the personalized deep feature extractor is correlated with an output of the universal deep feature extractor, facilitating subsequent feature fusion.

It should be understood by those skilled in the art that any way for obtaining optical remote sensing data, radar remote sensing data, and hyperspectral remote sensing data in the conventional technology falls within the protection of the present disclosure.

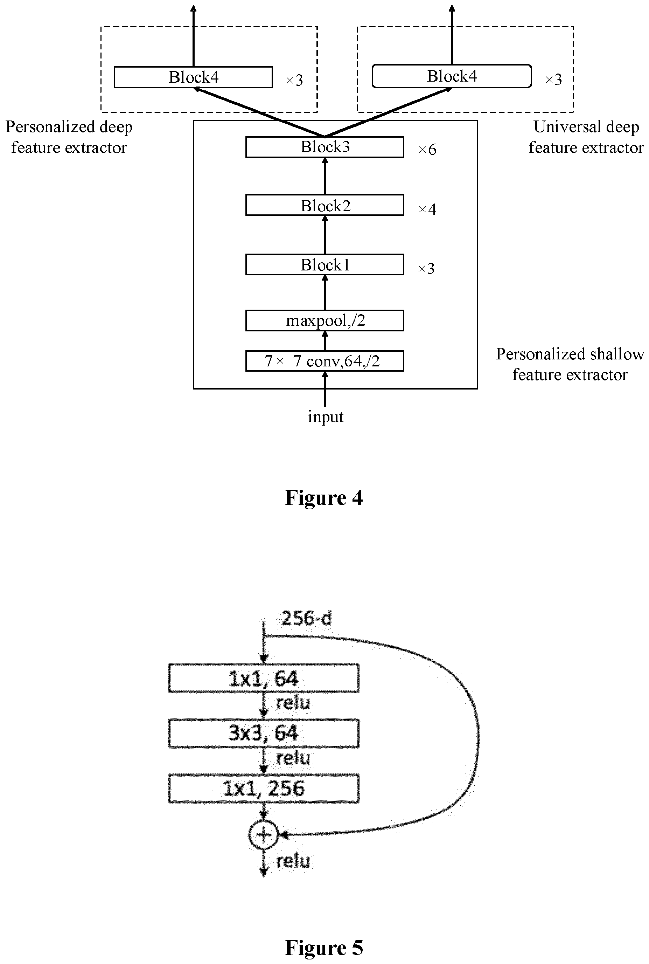

In the present disclosure, Resnet-50 is used as a backbone network for feature extraction. The backbone network serves as a part of the first neural network and a part of the second neural network. As shown in Figure 4, the shallow feature extractor includes 3 Block1s, 4 Block2s and 6 Block3s, the personalized deep feature extractor includes 3 Block4s, the universal deep feature extractor includes 3 Block4s, and each of the Block1, Block2, Block3 and Block4s has a residual block structure. In the residual block structure, an input feature matrix enters residual blocks with two branches. A straight-line branch outputs a feature matrix through multiple convolution layers, and the feature matrix is added to a matrix outputted by a shortcut branch. Figure 5 shows a structure of Block1. The structures of Block2, Block3 and Block4 are similar to the structure of Block1, and are different from the structure of Block1 in dimensions.

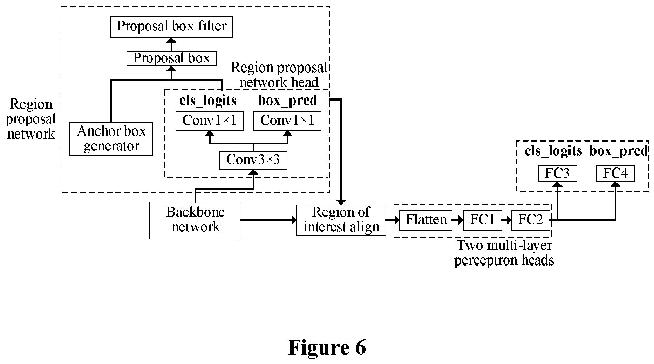

The structure of the universal task head according to the present disclosure is shown in Figure 6. The universal task head adopts a Mask R-CNN, which includes a region proposal network (RPN), a region of interest align (ROI align) and a detection head. The region proposal network is used for generating a series of candidate bounding boxes on a feature map. The region of interest align transforms and integrates candidate boxes with different dimensions to features with a same dimension, reducing the impact of quantization rounding on detection accuracy and retaining features of an original region. The detection head includes a series of fully connected layers, in which two multi-layer perceptron (MLP) heads flatten the feature map and are connected to two fully connection layers and the two fully connection layers respectively predict a category score and a boundary box regression parameter.

In the present disclosure, the personalized task head outputs the category score by using the fully connection layers.

In the present disclosure, features extracted by the universal deep feature extractor are inputted to a corresponding regional candidate network structure to generate candidate boxes, the candidate boxes generated by the regional candidate network are projected to the feature map to obtain corresponding feature matrixes, and then each of the feature matrixes is scaled to a 7*7 feature map by using the region of interest align layer, and finally the feature map is flattened to obtain a prediction result by using the series of fully connection layers.

In S200, the first satellite transmits the first prediction result and the first feature to the second satellite, so that the second satellite performs determination based on the first prediction result, the first feature, a second prediction result and a second feature. The second prediction result and the second feature are respectively a prediction result and a feature of second remote sensing data of the observation region obtained by the second satellite. The second prediction result includes a probability of the second remote sensing data including an object of a predetermined type. The second feature is used for obtaining a probability. The first remote sensing data is obtained in an imaging mode same as or different from an imaging mode in which the second remote sensing data is obtained, and the imaging mode includes an optical remote sensing data imaging mode, a radar remote sensing data imaging mode, and a hyperspectral remote sensing data imaging mode.

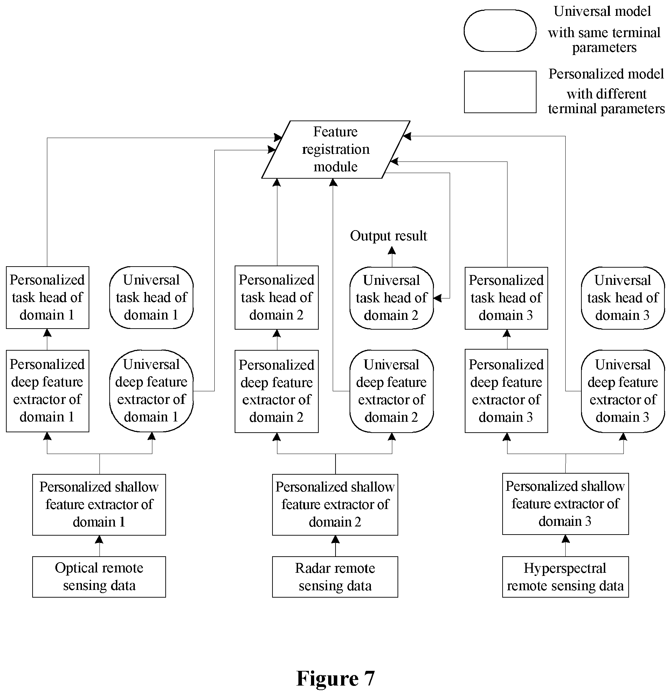

In an embodiment of the present disclosure, as shown in Figure 7, the first satellite transmits a first detection result (that is, the first prediction result and the first feature) to the second satellite, and the third satellite transmits a third detection result (that is, the third prediction result and the third feature) to the second satellite. The second satellite receives the first detection result from the first satellite and the third detection result from the third satellite, and performs determination based on the received first detection result, the received third detection result, and a second detection result (that is, the second prediction result and the second feature) obtained by the second satellite.

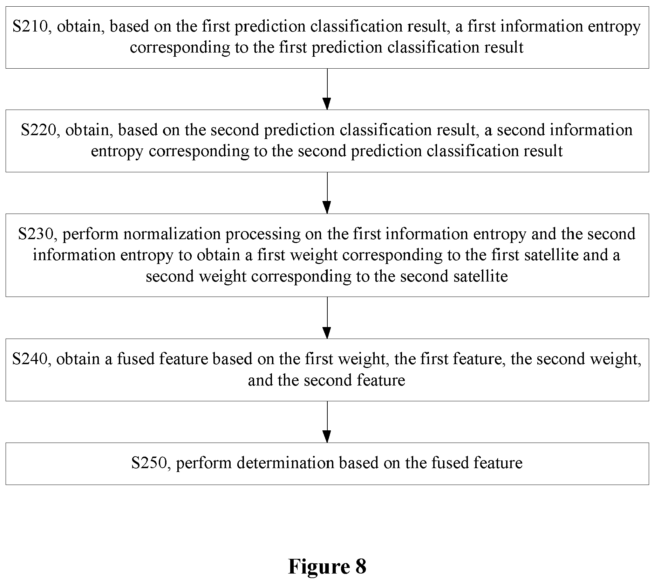

According to the present disclosure, as shown in Figure 8, the second satellite performs determination based on the first prediction result, the first feature and the second detection result by performing the following steps S210 to S250.

In S210, a first information entropy corresponding to the first prediction result is obtained based on the first prediction result.

According to the present disclosure, personalized task heads of first sub models of neural networks of K satellites are modeled as:

$$f(h_j, \theta_j), \quad j=1,2,\ldots,K$$

where $h_j$ represents an output of a personalized deep feature extractor of a first sub model of a neural network corresponding to a j-th satellite, and $\theta_j$ represents a parameter of a personalized task head of the first sub model of the neural network corresponding to the j-th satellite. In testing, a prediction result outputted by the first sub model of the neural network corresponding to the j-th satellite for $x_j$ is expressed as:

$$p(\hat{y} = 1|h_j, \theta_j), \ p(\hat{y} = 2|h_j, \theta_j), \ldots \ p(\hat{y} = E_j|h_j, \theta_j)$$

where $p(\hat{y} = e|h_j, \theta_j)$ represents a probability that a type $\hat{y}$ corresponding to $x_j$ is an e-th predetermined type, e ranges from 1 to $E_j$, $E_j$ represents the number of predetermined types included in the prediction result outputted by the first sub model of the neural network corresponding to the j-th satellite for $x_j$, and $x_j$ represents predicted and classified remote sensing data corresponding to the j-th satellite. An information entropy $H(\hat{y}|x_j,\theta_j)$ corresponding to the j-th satellite may be expressed as:

$$H(\hat{y}|x_j, \theta_j) = -\sum_{e=1}^{E_j} p(\hat{y} = e|h_j, \theta_j) \log p(\hat{y} = e|h_j, \theta_j)$$

For example, in testing, in a case that a prediction result outputted by a first sub model of a neural network corresponding to a first satellite for $x_1$ indicates that: a probability that a type $\hat{y}$ corresponding to $x_1$ is a first preset type is pi and a probability that the type $\hat{y}$ corresponding to $x_1$ is a second preset type is $p_2$, then Ei=2 and $H(\hat{y}|x_1, \theta_1) = -(p_1$

* log $p_1$ + $p_2$ * log $p_2$). A smaller information entropy H($\hat{y}$|$x_j$, $\theta_j$) corresponding to the j-th satellite indicates that the j-th satellite is more accurate in predicting classification results.

In S220, based on the second prediction result, a second information entropy corresponding to the second prediction result is obtained.

In S230, normalization processing is performed on the first information entropy and the second information entropy to obtain a first weight corresponding to the first satellite and a second weight corresponding to the second satellite.

In S240, a fused feature is obtained based on the first weight, the first feature, the second weight, and the second feature.

In S250, determination is performed based on the fused feature.

In an embodiment, the fused feature is obtained based on a universal task head in a fourth sub model.

It should be understood that the first group may include other satellites besides the first satellite and the second satellite. The process of the second satellite performing object identification based on the first prediction result, the first feature and the second detection result further includes: obtaining an information entropy based on prediction results corresponding to the other satellites in the first group. The step S230 is performed by performing normalization processing on the first information entropy, the second information entropy, and the information entropy corresponding to the other satellites in the first group to obtain a first weight corresponding to the first satellite, a second weight corresponding to the second satellite, and weights corresponding to the other satellites in the first group. The step S240 is performed by obtaining a fused feature based on the first weight, the first feature, the second weight, the second feature, and weights and features corresponding to the other satellites in the first group.

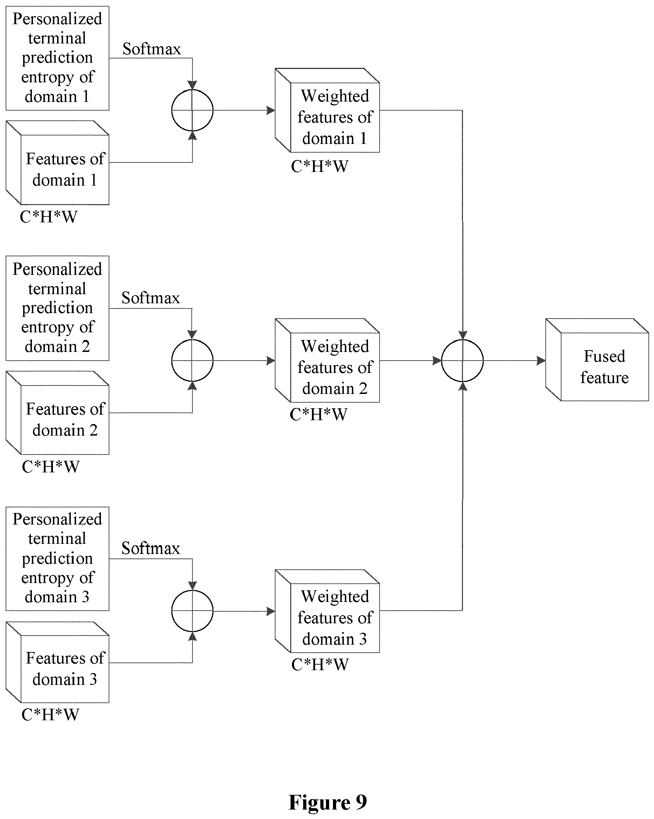

In an embodiment of the present disclosure, as shown in Figure 9, each of information entropies corresponding to three satellites is processed by performing normalization processing using a softmax, and then is mapped to a range of (0, 1). A value obtained after mapping is determined as a weight of a feature extracted by a second sub model of a neural network on a satellite. A fused feature is obtained by performing weighted summation. In Figure 9, C represents the number of channels of an image, H represents a height of the image, and W represents a width of the image.

According to the present disclosure, features detected by second sub models of neural networks corresponding to multiple satellites for the same observation region are fused, thus a fused feature having a strong feature expression ability is obtained, thereby obtaining an accurate object identification result based on the fused feature.

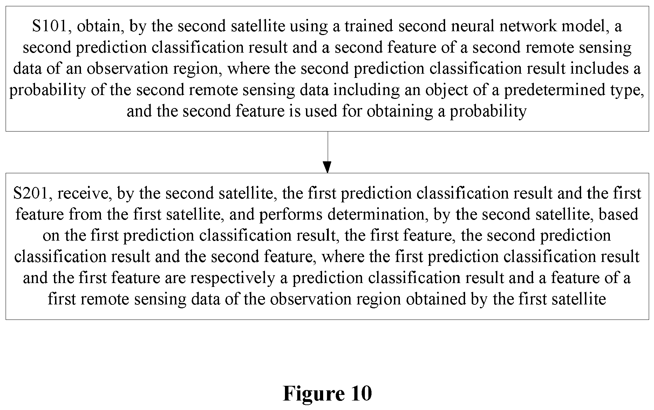

According to a second aspect of the present disclosure, a constellation-based remote sensing distributed collaborative determination method is provided. As shown in Figure 10, the method includes the following steps S101 and S201.

In S101, the second satellite obtains, by using a trained second neural network, a second prediction result and a second feature of second remote sensing data of an observation region. The second prediction result includes a probability of the second remote sensing data including an object of a predetermined type. The second feature is used for obtaining a probability.

In the present disclosure, the second satellite is arranged with a trained second neural network. The second neural network includes a third sub model and a fourth sub model. The third sub model includes a second shallow feature extractor, a third deep feature extractor and a third predictor, and the fourth sub model includes a second shallow feature extractor, a fourth deep feature extractor and a fourth predictor. The second remote sensing data of the observation region is inputted to the second shallow feature extractor. The second shallow feature extractor is configured to extract visual texture information of the second remote sensing data. An output of the second shallow feature extractor is inputted to the third deep feature extractor and the fourth deep feature extractor. The third deep feature extractor and the fourth deep feature extractor are configured to extract semantic information of the second remote sensing data. An output of the third deep feature extractor is inputted to the third predictor. The third predictor is configured to obtain the probability of the second remote sensing data including the object of the predetermined type. The third predictor outputs the second prediction result. The fourth deep feature extractor outputs the second feature. The fourth predictor is configured to obtain the probability of the second remote sensing data including the object of the predetermined type and a position of the object of the predetermined type in the second remote sensing data. An output of the fourth deep feature extractor is inputted to the fourth predictor.

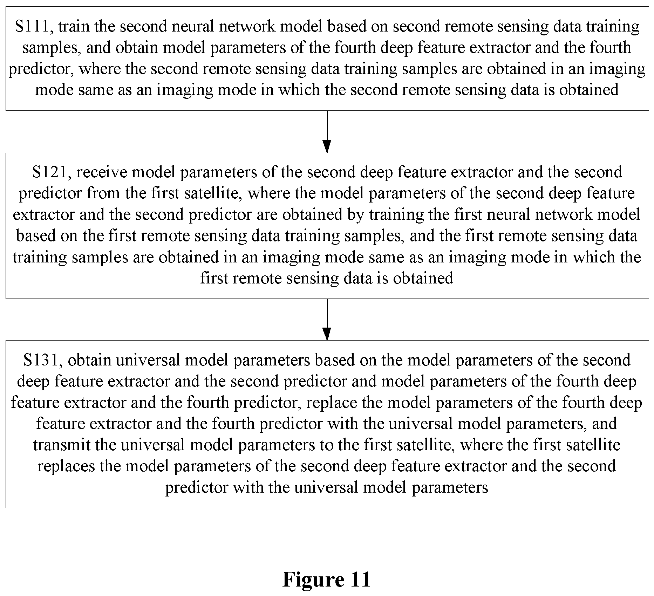

According to the present disclosure, as shown in Figure 11, the second neural network is trained by performing the following steps S111, S121 and S131.

In S111, the second neural network is trained based on second remote sensing data training samples, and model parameters of the fourth deep feature extractor and the fourth predictor are obtained. The second remote sensing data training samples are obtained in an imaging mode same as an imaging mode in which the second remote sensing data is obtained.

In the present disclosure, the first satellite is arranged with a trained first neural network. The first neural network includes a first sub model and a second sub model. The first prediction result is obtained by the first sub model, and the first feature is obtained by the second sub model. The first sub model includes a first shallow feature extractor, a first deep feature extractor, and a first predictor. The second sub model includes a first shallow feature extractor, a second deep feature extractor, and a second predictor. The first remote sensing data of the observation region is inputted to the first shallow feature extractor. The first shallow feature extractor is configured to extract visual texture information of the first remote sensing data. An output of the first shallow feature extractor is inputted to the first deep feature extractor and the second deep feature extractor. The first deep feature extractor and the second deep feature extractor are configured to extract semantic information of the first remote sensing data. An output of the first deep feature extractor is inputted to the first predictor. The first predictor is configured to obtain the probability of the first remote sensing data including the object of the predetermined type. The first predictor outputs the first prediction result. The second predictor is configured to obtain the probability of the first remote sensing data including the object of the predetermined type and a position of the object of the predetermined type in the first remote sensing data. An output of the second deep feature extractor is inputted to the second predictor.

In the present disclosure, model parameters of neural networks corresponding to the first satellite and the second satellite are randomly initialized before performing training. The parameters of the first sub model may be the same or different from the parameters of the third sub model, and the parameters of the second sub model are the same as the parameters of the fourth sub model. It should be noted that in a case that the first group includes other satellites in addition to the first satellite, it is required to configure parameters of first sub models of the other satellites to be same as or different from parameters of third sub models of the other satellites and configure parameters of second sub models of the other satellites to be same as parameters of fourth sub models of the other satellites before performing training.

In training the second neural network arranged on the second satellite, a loss same as the loss used in training the first neural network of the first satellite is used, which is not repeated herein.

In S 121, model parameters of the second deep feature extractor and the second predictor are received from the first satellite. The model parameters of the second deep feature extractor and the second predictor are obtained by training the first neural network based on the first remote sensing data training samples. The first remote sensing data training samples are obtained in an imaging mode same as an imaging mode in which the first remote sensing data is obtained.

The first shallow feature extractor, the first deep feature extractor, the first predictor, the second shallow feature extractor, the third deep feature extractor and the third predictor do not perform interaction in training the first neural network and the second neural network. The second deep feature extractor, the second predictor, the fourth deep feature extractor and the fourth predictor perform interaction in training the first neural network and the second neural network.

In S 131, universal model parameters are obtained based on the model parameters of the second deep feature extractor and the second predictor and model parameters of the fourth deep feature extractor and the fourth predictor, the model parameters of the fourth deep feature extractor and the fourth predictor are replaced with the universal model parameters, and the universal model parameters are transmitted to the first satellite. Thus, the first satellite replaces the model parameters of the second deep feature extractor and the second predictor with the universal model parameters.

The universal model parameters are positively correlated with the model parameters of the second deep feature extractor and the second predictor, and the universal model parameters are positively correlated with the model parameters of the fourth deep feature extractor and the fourth predictor. In an embodiment, the universal model parameters are average values of model parameters of deep feature extractors and predictors in the second sub models of the neural networks corresponding to the first satellite and the second satellite. It should be understood that in a case that the second satellite receives model parameters of a deep feature extractor and a predictor in a second sub model corresponding to another satellite belong to the first group other than the first satellite, the universal model parameters are average values of the model parameters of deep feature extractors and predictors in second sub models of neural networks corresponding to the first satellite, the second satellite, and the another satellite belong to the first group.

In the present disclosure, in training the second neural network of the second satellite, parameter averaging communication is performed based on the model parameters of the deep feature extractor and the predictor in the second sub model of the first satellite, obtaining cross-satellite knowledge supplementation, thereby improving the generalization ability of the fourth sub model of the second neural network.

In S201, the second satellite receives the first prediction result and the first feature from the first satellite, and performs determination based on the first prediction result, the first feature, the second prediction result and the second feature. The first prediction result and the first feature are respectively a prediction result and a feature of first remote sensing data of the observation region obtained by the first satellite. The first prediction result includes a probability of the first remote sensing data including an object of a predetermined type. The first feature is used for obtaining probabilities. The first remote sensing data is obtained in an imaging mode same as or different from an imaging mode in which the second remote sensing data is obtained, and the imaging mode includes an optical remote sensing data imaging mode, a radar remote sensing data imaging mode, and a hyperspectral remote sensing data imaging mode.

The process of the second satellite performing determination based on the first prediction result, the first feature, the second prediction result and the second feature is described in steps S210 to S250, and is not repeated herein.

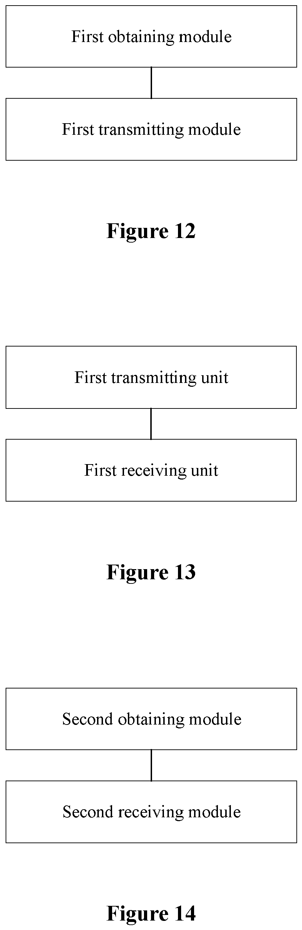

According to a third aspect of the present disclosure, a constellation-based remote sensing distributed collaborative determination apparatus is provided. As shown in Figure 12, the apparatus includes: a first obtaining module and a first transmitting module.

The first obtaining module is configured to obtain, by the first satellite using a trained first neural network, a first prediction result and a first feature of first remote sensing data of an observation region. The first neural network includes a first shallow feature extractor, a first deep feature extractor, a first predictor and a second deep feature extractor. The first remote sensing data of the observation region is inputted to the first shallow feature extractor. The first shallow feature extractor is configured to extract visual texture information of the first remote sensing data. An output of the first shallow feature extractor is inputted to the first deep feature extractor and the second deep feature extractor. The first deep feature extractor and the second deep feature extractor are configured to extract semantic information of the first remote sensing data. An output of the first deep feature extractor is inputted to the first predictor. The first predictor outputs the first prediction result. The first prediction result includes a probability of the first remote sensing data including an object of a predetermined type. The second deep feature extractor outputs the first feature, and the first feature is used for obtaining probabilities.

The first transmitting module is configured to transmit, by using the first satellite, the first prediction result and the first feature to the second satellite. The second satellite performs determination based on the first prediction result, the first feature, a second prediction result and a second feature. The second prediction result and the second feature are respectively a prediction result and a feature of second remote sensing data of the observation region obtained by the second satellite. The second prediction result includes a probability of the second remote sensing data including an object of a predetermined type. The second feature is used for obtaining a probability. The first remote sensing data is obtained in an imaging mode same as or different from an imaging mode in which the second remote sensing data is obtained. The imaging mode includes an optical remote sensing data imaging mode, a radar remote sensing data imaging mode, and a hyperspectral remote sensing data imaging mode.

According to the present disclosure, as shown in Figure 13, the first obtaining module includes a first transmitting unit and a first receiving unit.

The first transmitting unit is configured to train the first neural network based on first remote sensing data training samples, and transmit model parameters of the second deep feature extractor and the second predictor obtained after training to the second satellite. The second satellite obtains universal model parameters based on the model parameters of the second deep feature extractor and the second predictor and model parameters of the fourth deep feature extractor and the fourth predictor, the second satellite transmits the universal model parameters to the first satellite. The first remote sensing data training samples are obtained in an imaging mode same as the imaging mode in which the first remote sensing data is obtained. The model parameters of the fourth deep feature extractor and the fourth predictor are obtained by training the second neural network based on second remote sensing data training samples. The second remote sensing data training samples are obtained in an imaging mode same as the imaging mode in which the second remote sensing data is obtained.

The first receiving unit is configured to receive the universal model parameters and replace the model parameters of the second deep feature extractor and the second predictor with the universal model parameters.

According to the present disclosure, the universal model parameters are positively correlated with the model parameters of the second deep feature extractor and the second predictor, and the universal model parameters are positively correlated with the model parameters of the fourth deep feature extractor and the fourth predictor.

According to a fourth aspect of the present disclosure, a constellation-based remote sensing distributed collaborative determination apparatus is provided. As shown in Figure 14, the apparatus includes: a second obtaining module and a second receiving module.

The second obtaining module is configured to obtain, by the second satellite using a trained second neural network, a second prediction result and a second feature of second remote sensing data of an observation region. The second neural network includes a second shallow feature extractor, a third deep feature extractor, a third predictor and a fourth deep feature extractor. The second remote sensing data of the observation region is inputted to the second shallow feature extractor. The second shallow feature extractor is configured to extract visual texture information of the second remote sensing data. An output of the second shallow feature extractor is inputted to the third deep feature extractor and the fourth deep feature extractor. The third deep feature extractor and the fourth deep feature extractor are configured to extract semantic information of the second remote sensing data. An output of the third deep feature extractor is inputted to the third predictor. The third predictor is configured to obtain a probability of the first remote sensing data including an object of a predetermined type. The third predictor outputs the second prediction result. The second prediction result includes a probability of the second remote sensing data including an object of a predetermined type. The fourth deep feature extractor outputs the second feature, and the second feature is used for obtaining a probability.

The second receiving module is configured to receive, by using the second satellite, the first prediction result and the first feature from the first satellite, and perform determination, by using the second satellite, based on the first prediction result, the first feature, the second prediction result and the second feature. The first prediction result and the first feature are respectively a prediction result and a feature of first remote sensing data of the observation region obtained by the first satellite. The first prediction result includes a probability of the first remote sensing data including an object of a predetermined type. The first feature is used for obtaining probabilities. The first remote sensing data is obtained in an imaging mode same as or different from an imaging mode in which the second remote sensing data is obtained. The imaging mode includes an optical remote sensing data imaging mode, a radar remote sensing data imaging mode, and a hyperspectral remote sensing data imaging mode.

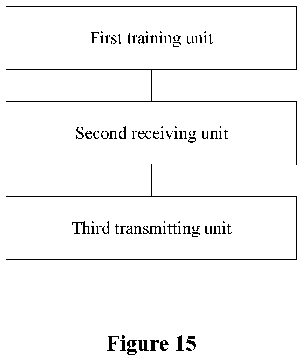

According to the present disclosure, as shown in Figure 15, the second obtaining module includes: a first training unit, a second receiving unit, and a third transmitting unit.

The first training unit is configured to train the second neural network based on second remote sensing data training samples, and obtain model parameters of the fourth deep feature extractor and the fourth predictor. The second remote sensing data training samples are obtained in an imaging mode same as an imaging mode in which the second remote sensing data is obtained.

The second receiving unit is configured to receive model parameters of the second deep feature extractor and the second predictor from the first satellite. The model parameters of the second deep feature extractor and the second predictor are obtained by training the first neural network based on the first remote sensing data training samples. The first remote sensing data training samples are obtained in an imaging mode same as an imaging mode in which the first remote sensing data is obtained.

The third transmitting unit is configured to obtain universal model parameters based on the model parameters of the second deep feature extractor and the second predictor and model parameters of the fourth deep feature extractor and the fourth predictor, replace the model parameters of the fourth deep feature extractor and the fourth predictor with the universal model parameters, and transmit the universal model parameters to the first satellite. The first satellite replaces the model parameters of the second deep feature extractor and the second predictor with the universal model parameters.

According to a fifth aspect of the present disclosure, a storage medium is provided. The storage medium stores a computer program. The computer program, when executed by a processor, causes the processor to perform steps S100 and S200 or perform steps S101 and S201.

According to a sixth aspect of the present disclosure, a satellite is provided. The satellite includes a computer device. The computer device includes a processor and a memory. The memory stores computer-readable instructions. The computer-readable instructions, when executed by the processor, cause the processor to perform steps S100 and S200 or perform steps S101 and S201.

Although the embodiments of the present disclosure have been described in detail with examples, those skilled in the art should understand that the above examples are only for illustration and not to limit the scope of the present disclosure. Those skilled in the art should understand that various modifications may be made to the embodiments without departing from the scope and spirit of the present disclosure. The scope of the present disclosure should be based on the protection scope of the claims.

**Claims**

1. A constellation-based remote sensing distributed collaborative determination method, wherein a constellation comprises n (n≥2) satellites, the constellation comprises a first satellite and a second satellite, and the constellation-based remote sensing distributed collaborative determination method comprises:

   obtaining, by the first satellite using a trained first neural network, a first prediction result and a first feature of first remote sensing data of an observation region, wherein the first neural network comprises a first shallow feature extractor, a first deep feature extractor, a first predictor and a second deep feature extractor, the first remote sensing data of the observation region is inputted to the first shallow feature extractor, the first shallow feature extractor is configured to extract visual texture information of the first remote sensing data, an output of the first shallow feature extractor is inputted to the first deep feature extractor and the second deep feature extractor, the first deep feature extractor and the second deep feature extractor are configured to extract semantic information of the first remote sensing data, an output of the first deep feature extractor is inputted to the first predictor, the first predictor outputs the first prediction result, the first prediction result comprises a probability of the first remote sensing data comprising an object of a predetermined type, the second deep feature extractor outputs the first feature, and the first feature is used for obtaining probabilities; and
   transmitting, by the first satellite, the first prediction result and the first feature to the second satellite, wherein the second satellite performs determination based on the first prediction result, the first feature, a second prediction result and a second feature, the second prediction result and the second feature are respectively a prediction result and a feature of second remote sensing data of the observation region obtained by the second satellite, the second prediction result comprises a probability of the second remote sensing data comprising an object of a predetermined type, the second feature is used for obtaining a probability, the first remote sensing data is obtained in an imaging mode same as or different from an imaging mode in which the second remote sensing data is obtained, and the imaging mode comprises an optical remote sensing data imaging mode, a radar remote sensing data imaging mode and a hyperspectral remote sensing data imaging mode, the second prediction result and the second feature are obtained by the second satellite using a trained second neural network, the second neural network comprises a second shallow feature extractor, a third deep feature extractor, a third predictor, a fourth deep feature extractor and a fourth predictor, the first neural network further comprises a second predictor, and the first neural network is trained by:

training the first neural network based on first remote sensing data training samples, and transmitting model parameters of the second deep feature extractor and the second predictor obtained after training to the second satellite, wherein the second satellite obtains universal model parameters based on the model parameters of the second deep feature extractor and the second predictor and model parameters of the fourth deep feature extractor and the fourth predictor, the second satellite transmits the universal model parameters to the first satellite, the first remote sensing data training samples are obtained in an imaging mode same as the imaging mode in which the first remote sensing data is obtained, the model parameters of the fourth deep feature extractor and the fourth predictor are obtained by training the second neural network based on second remote sensing data training samples, and the second remote sensing data training samples are obtained in an imaging mode same as the imaging mode in which the second remote sensing data is obtained; and

receiving the universal model parameters, and replacing the model parameters of the second deep feature extractor and the second predictor with the universal model parameters.

2. The constellation-based remote sensing distributed collaborative determination method according to claim 1, wherein the second remote sensing data of the observation region is inputted to the second shallow feature extractor, the second shallow feature extractor is configured to extract visual texture information of the second remote sensing data, an output of the second shallow feature extractor is inputted to the third deep feature extractor and the fourth deep feature extractor, the third deep feature extractor and the fourth deep feature extractor are configured to extract semantic information of the second remote sensing data, an output of the third deep feature extractor is inputted to the third predictor, the third predictor is configured to obtain the probability of the second remote sensing data comprising the object of the predetermined type, the third predictor outputs the second prediction result, and the fourth deep feature extractor outputs the second feature.

3. The constellation-based remote sensing distributed collaborative determination method according to claim 2, wherein the second predictor is configured to obtain the probability of the first remote sensing data comprising the object of the predetermined type and a position of the object of the predetermined type in the first remote sensing data, an output of the second deep feature extractor is inputted to the second predictor, the fourth predictor is configured to obtain the probability of the second remote sensing data comprising the object of the predetermined type and a position of the object of the predetermined type in the second remote sensing data, an output of the fourth deep feature extractor is inputted to the fourth predictor, the first shallow feature extractor, the first deep feature extractor, the first predictor, the second shallow feature extractor, the third deep feature extractor and the third predictor do not perform interaction in training the first neural network and the second neural network, and the second deep feature extractor, the second predictor, the fourth deep feature extractor and the fourth predictor perform interaction in training the first neural network and the second neural network.

4. The constellation-based remote sensing distributed collaborative determination method according to claim 3, wherein the universal model parameters are positively correlated with the model parameters of the second deep feature extractor and the second predictor, and the universal model parameters are positively correlated with the model parameters of the fourth deep feature extractor and the fourth predictor.

5. The constellation-based remote sensing distributed collaborative determination method according to any of the preceding claims, wherein the second satellite performs determination based on the first prediction result, the first feature, the second prediction result and the second feature by:

obtaining, based on the first prediction result, a first information entropy corresponding to the first prediction result;
obtaining, based on the second prediction result, a second information entropy corresponding to the second prediction result;
performing normalization processing on the first information entropy and the second information entropy to obtain a first weight corresponding to the first satellite and a second weight corresponding to the second satellite;

obtaining a fused feature based on the first weight, the first feature, the second weight, and the second feature; and

performing determination based on the fused feature.

**6.** The constellation-based remote sensing distributed collaborative determination method according to claim 5, wherein both the first feature and the second feature are positively correlated with the fused feature.

**7.** A constellation-based remote sensing distributed collaborative determination apparatus, wherein a constellation comprises n (n≥2) satellites, the constellation comprises a first satellite and a second satellite, and the constellation-based remote sensing distributed collaborative determination apparatus comprises:

a first obtaining module, configured to obtain, by the first satellite using a trained first neural network, a first prediction result and a first feature of first remote sensing data of an observation region, wherein the first neural network comprises a first shallow feature extractor, a first deep feature extractor, a first predictor and a second deep feature extractor, the first remote sensing data of the observation region is inputted to the first shallow feature extractor, the first shallow feature extractor is configured to extract visual texture information of the first remote sensing data, an output of the first shallow feature extractor is inputted to the first deep feature extractor and the second deep feature extractor, the first deep feature extractor and the second deep feature extractor are configured to extract semantic information of the first remote sensing data, an output of the first deep feature extractor is inputted to the first predictor, the first predictor outputs the first prediction result, the first prediction result comprises a probability of the first remote sensing data comprising an object of a predetermined type, the second deep feature extractor outputs the first feature, and the first feature is used for obtaining probabilities; and

a first transmitting module, configured to transmit, by using the first satellite, the first prediction result and the first feature to the second satellite, wherein the second satellite performs determination based on the first prediction result, the first feature, a second prediction result and a second feature, the second prediction result and the second feature are respectively a prediction result and a feature of second remote sensing data of the observation region obtained by the second satellite, the second prediction result comprises a probability of the second remote sensing data comprising an object of a predetermined type, the second feature is used for obtaining a probability, the first remote sensing data is obtained in an imaging mode same as or different from an imaging mode in which the second remote sensing data is obtained, and the imaging mode comprises an optical remote sensing data imaging mode, a radar remote sensing data imaging mode, and a hyperspectral remote sensing data imaging mode, the second prediction result and the second feature are obtained by the second satellite using a trained second neural network, the second neural network comprises a second shallow feature extractor, a third deep feature extractor, a third predictor, a fourth deep feature extractor and a fourth predictor, the first neural network further comprises a second predictor, and the first neural network is trained by:

training the first neural network based on first remote sensing data training samples, and transmitting model parameters of the second deep feature extractor and the second predictor obtained after training to the second satellite, wherein the second satellite obtains universal model parameters based on the model parameters of the second deep feature extractor and the second predictor and model parameters of the fourth deep feature extractor and the fourth predictor, the second satellite transmits the universal model parameters to the first satellite, the first remote sensing data training samples are obtained in an imaging mode same as the imaging mode in which the first remote sensing data is obtained, the model parameters of the fourth deep feature extractor and the fourth predictor are obtained by training the second neural network based on second remote sensing data training samples, and the second remote sensing data training samples are obtained in an imaging mode same as the imaging mode in which the second remote sensing data is obtained; and

receiving the universal model parameters, and replacing the model parameters of the second deep feature extractor and the second predictor with the universal model parameters.

**8.** The constellation-based remote sensing distributed collaborative determination apparatus according to claim 7, wherein the second remote sensing data of the observation region is inputted to the second shallow feature extractor, the second shallow feature extractor is configured to extract visual texture information of the second remote sensing data, an output of the second shallow feature extractor is inputted to the third deep feature extractor and the fourth deep feature extractor, the third deep feature extractor and the fourth deep feature extractor are configured to extract semantic information of the second remote sensing data, an output of the third deep feature extractor is inputted to the third predictor, the third predictor is configured to obtain the probability of the second remote sensing data comprising the object of the predetermined type, the third predictor outputs the second prediction result, and the fourth deep feature extractor outputs the second feature.

9. The constellation-based remote sensing distributed collaborative determination apparatus according to claim 8, wherein the second predictor is configured to obtain the probability of the first remote sensing data comprising the object of the predetermined type and a position of the object of the predetermined type in the first remote sensing data, an output of the second deep feature extractor is inputted to the second predictor, the fourth predictor is configured to obtain the probability of the second remote sensing data comprising the object of the predetermined type and a position of the object of the predetermined type in the second remote sensing data, an output of the fourth deep feature extractor is inputted to the fourth predictor, the first shallow feature extractor, the first deep feature extractor, the first predictor, the second shallow feature extractor, the third deep feature extractor and the third predictor do not perform interaction in training the first neural network and the second neural network, and the second deep feature extractor, the second predictor, the fourth deep feature extractor and the fourth predictor perform interaction in training the first neural network and the second neural network.

10. The constellation-based remote sensing distributed collaborative determination apparatus according to claim 9, wherein the universal model parameters are positively correlated with the model parameters of the second deep feature extractor and the second predictor, and the universal model parameters are positively correlated with the model parameters of the fourth deep feature extractor and the fourth predictor.

11. The constellation-based remote sensing distributed collaborative determination apparatus according to any of claims 7 to 10, wherein the second satellite performs determination based on the first prediction result, the first feature, the second prediction result and the second feature by:

    obtaining, based on the first prediction result, a first information entropy corresponding to the first prediction result;
    obtaining, based on the second prediction result, a second information entropy corresponding to the second prediction result;
    performing normalization processing on the first information entropy and the second information entropy to obtain a first weight corresponding to the first satellite and a second weight corresponding to the second satellite;
    obtaining a fused feature based on the first weight, the first feature, the second weight, and the second feature; and
    performing determination based on the fused feature.

12. The constellation-based remote sensing distributed collaborative determination apparatus according to claim 11, wherein both the first feature and the second feature are positively correlated with the fused feature.

13. A storage medium storing a computer program, wherein the computer program, when executed by a processor, causes the processor to perform the constellation-based remote sensing distributed collaborative determination method according to any one of claims 1 to 6.

14. A satellite, comprising a computer device, wherein
the computer device comprises a processor and a memory, the memory stores computer-readable instructions, and the computer-readable instructions, when executed by the processor, cause the processor to perform the constellation-based remote sensing distributed collaborative determination method according to any one of claims 1 to 6.

S100, obtain, by the first satellite using a trained first neural network model, a first prediction classification result and a first feature of a first remote sensing data of an observation region, where the first prediction classification result includes a probability of the first remote sensing data including an object of a predetermined type, and the first feature is used for obtaining a probability

S200, transmit, by the first satellite, the first prediction classification result and the first feature to the second satellite, where the second satellite performs determination based on the first prediction classification result, the first feature, a second prediction classification result and a second feature, and the second prediction classification result and the second feature are respectively a prediction classification result and a feature of a second remote sensing data of the observation region obtained by the second satellite

**Figure 1**

S110, train the first neural network model based on first remote sensing data training samples, and transmit model parameters of the second deep feature extractor and the second predictor obtained after training to the second satellite, where the second satellite obtains universal model parameters based on the model parameters of the second deep feature extractor and the second predictor and model parameters of a fourth deep feature extractor and a fourth predictor, and the second satellite transmits the universal model parameters to the first satellite

S120, receive the universal model parameters, and replace the model parameters of the second deep feature extractor and the second predictor with the universal model parameters

**Figure 2**

**Figure 3**

**Figure 4**

**Figure 5**

**Figure 6**

Figure 7

S210, obtain, based on the first prediction classification result, a first information entropy corresponding to the first prediction classification result

↓

S220, obtain, based on the second prediction classification result, a second information entropy corresponding to the second prediction classification result

↓

S230, perform normalization processing on the first information entropy and the second information entropy to obtain a first weight corresponding to the first satellite and a second weight corresponding to the second satellite

↓

S240, obtain a fused feature based on the first weight, the first feature, the second weight, and the second feature

↓

S250, perform determination based on the fused feature

**Figure 8**

**Figure 9**

S101, obtain, by the second satellite using a trained second neural network model, a second prediction classification result and a second feature of a second remote sensing data of an observation region, where the second prediction classification result includes a probability of the second remote sensing data including an object of a predetermined type, and the second feature is used for obtaining a probability

S201, receive, by the second satellite, the first prediction classification result and the first feature from the first satellite, and performs determination, by the second satellite, based on the first prediction classification result, the first feature, the second prediction classification result and the second feature, where the first prediction classification result and the first feature are respectively a prediction classification result and a feature of a first remote sensing data of the observation region obtained by the first satellite

**Figure 10**

S111, train the second neural network model based on second remote sensing data training samples, and obtain model parameters of the fourth deep feature extractor and the fourth predictor, where the second remote sensing data training samples are obtained in an imaging mode same as an imaging mode in which the second remote sensing data is obtained

S121, receive model parameters of the second deep feature extractor and the second predictor from the first satellite, where the model parameters of the second deep feature extractor and the second predictor are obtained by training the first neural network model based on the first remote sensing data training samples, and the first remote sensing data training samples are obtained in an imaging mode same as an imaging mode in which the first remote sensing data is obtained

S131, obtain universal model parameters based on the model parameters of the second deep feature extractor and the second predictor and model parameters of the fourth deep feature extractor and the fourth predictor, replace the model parameters of the fourth deep feature extractor and the fourth predictor with the universal model parameters, and transmit the universal model parameters to the first satellite, where the first satellite replaces the model parameters of the second deep feature extractor and the second predictor with the universal model parameters

**Figure 11**

First obtaining module

First transmitting module

**Figure 12**

First transmitting unit

First receiving unit

**Figure 13**

Second obtaining module

Second receiving module

**Figure 14**

First training unit

Second receiving unit

Third transmitting unit

**Figure 15**

**EUROPEAN SEARCH REPORT**

Application Number

EP 23 21 5426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/250751 A1 (KARGIEMAN EMILIANO [AR] ET AL) 31 August 2017 (2017-08-31)<br>* paragraph [0014] *<br>* paragraph [0037] - paragraph [0047] *<br>* paragraph [0058] *<br>* paragraph [0078] *<br>* paragraph [0111] *<br>* paragraph [0149] *<br>* figure 2 * | 1-14 | INV.<br>G06V10/54<br>G06V10/82<br>G06V10/94<br>G06V20/13<br>G06V20/10<br>B64G1/10 |
| A | WO 2018/121013 A1 (ZHEJIANG DAHUA TECHNOLOGY CO [CN])<br>5 July 2018 (2018-07-05)<br>* the whole document * | 1-14 | |
| A | Jason Brownlee: "Ensemble Learning Methods for Deep Learning Neural Networks",<br>Deep Learning Performance,<br>6 August 2019 (2019-08-06), pages 1-7,<br>XP093157868,<br>Retrieved from the Internet:<br>URL:https://machinelearningmastery.com/ensemble-methods-for-deep-learning-neural-networks/<br>[retrieved on 2024-05-01]<br>* the whole document * | 1-14 | TECHNICAL FIELDS SEARCHED (IPC)<br><br>G06V<br>B64G |

The present search report has been drawn up for all claims

| Place of search | Date of completion of the search | Examiner |
|---|---|---|
| The Hague | 2 May 2024 | De Coi, Juri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 5426

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | | | Publication date | Patent family member(s) | | | Publication date |
|---|---|---|---|---|---|---|---|
| US 2017250751 | A1 | | 31-08-2017 | BR | 112018017232 | A2 | 15-01-2019 |
| | | | | CA | 3014446 | A1 | 23-11-2017 |
| | | | | CN | 109076192 | A | 21-12-2018 |
| | | | | CN | 114612439 | A | 10-06-2022 |
| | | | | EP | 3424214 | A2 | 09-01-2019 |
| | | | | EP | 4036868 | A1 | 03-08-2022 |
| | | | | IL | 261136 | A | 31-10-2018 |
| | | | | IL | 278550 | A | 31-12-2020 |
| | | | | IL | 297135 | A | 01-12-2022 |
| | | | | JP | 7273094 | B2 | 12-05-2023 |
| | | | | JP | 2019513315 | A | 23-05-2019 |
| | | | | JP | 2021119693 | A | 12-08-2021 |
| | | | | US | 2017250751 | A1 | 31-08-2017 |
| | | | | US | 2022038172 | A1 | 03-02-2022 |
| | | | | WO | 2017200622 | A2 | 23-11-2017 |
| WO 2018121013 | A1 | | 05-07-2018 | EP | 3545466 | A1 | 02-10-2019 |
| | | | | US | 2019325605 | A1 | 24-10-2019 |
| | | | | WO | 2018121013 | A1 | 05-07-2018 |

EPO FORM P0459

For more details about this annex : see Official Journal of the European Patent Office, No. 12/82